# EUROPÄISCHE PATENTSCHRIFT

(11) **EP 1 709 803 B1**
(45) Veröffentlichungstag und Bekanntmachung des Hinweises auf die Patenterteilung: **01.12.2010**
(21) Anmeldenummer: 05701481.3
(22) Anmeldetag: 11.01.2005
(51) Int. Cl.: H04N 7/16, H04L 12/58

(54) **VERTEILUNG VON KURZNACHRICHTEN MITTELS EINER VIDEO CONTROL EINRICHTUNG**
DISTRIBUTION OF SHORT MESSAGES BY MEANS OF A VIDEO CONTROL DEVICE
DISTRIBUTION DE MESSAGES COURTS A L'AIDE D'UN EQUIPEMENT DE COMMANDE VIDEO

(30) Priorität: 29.01.2004 DE 102004004518
(43) Veröffentlichungstag der Anmeldung: 11.10.2006
(73) Patentinhaber: Nokia Siemens Networks GmbH & Co. KG, 81541 München (DE)
(72) Erfinder: UNGER, Stefan, 82008 Unterhaching (DE); KÜCHENHOFF, Stefan, 82041 Oberhaching (DE)
(86) Internationale Anmeldenummer: PCT/EP2005/050090
(87) Internationale Veröffentlichungsnummer: WO 2005/074282

(56) Entgegenhaltungen:
- WO-A-03/077550
- US-A1- 2003 226 143

## Beschreibung

In einem IP basierten Netz mit Video-zentrischen Diensten, d.h. Diensten bei denen ein wesentlicher Anteil der Information als Videodatenstrom übertragen wird (z.B. der Dienst "Video on Demand") soll es möglich sein, einem individuellen Teilnehmer (Tln) eine Kurznachricht, z.B. eine Kurznachricht ohne Bilder/Töne mittels Short Message Service (kurz SMS) oder eine Kurznachricht mit Bildern/Tönen mittels des sogenannten Multi Media Message Service (kurz MMS) zu senden bzw. dem Tln erlaubt sein, eine Kurznachricht zu versenden. Erfindungsgemäß wird diese Funktionalität durch den Control Server für die Videodienste bereitgestellt und in das am TV Gerät dargestellten Videobild integriert.

Aus der Druckschrift US 2003/226143 A1 (MICHAEL EREZ ET AL) 4. Dezember 2003 (2003-12-04) sind ein Verfahren und ein System zur Übermittlung von SMS Nachrichten mittels einer TV Kommunikationsinfrastruktur zum Empfang durch eine TV Set Top Box bekannt. SMS Nachrichten werden durch ein zellulares Telefon an einen zellularen Dienstanbieter gesendet und sind mit einer eindeutigen ID einer TV Set Top Box eines Zielteilnehmers verschlüsselt, so dass sie identifizierbar sind als für die TV Kommunikationsinfrastruktur bestimmt. Der zellulare Dienatanbieter leitet die SMS Nachricht an einen TV Kommunikationenetzübergang weiter, der die SMS Nachricht verarbeitet, einschließend eine Identifizierung der eindeutigen ID der TV Set Top Box des TV Teilnehmers, und Daten bezüglich der SMS Nachricht an die TV Set Top Box des TV Teilnehmers weiterleitet.

Heutige Videonetze sind hauptsächlich Kabel-basiert. IP basierte Videonetze sind relativ neu und werden zur Zeit weltweit implementiert. Lösungen, die es erlauben einem Teilnehmer individuell das Senden bzw. den Empfang von Kurznachrichten zu ermöglichen, sind bisher weder für IP- noch für Kabelbasierte Netze bekannt.
Bisherige Anwendungen, SMS-Nahrichten in Videoübertragung zu integrieren beschränken sich auf die Möglichkeit, dass beliebige Teilnehmer mittels Mobilfunkgerät eine SMS an eine spezielle Nummer senden können und der Inhalt der SMS dann vom Video Service Provider als Broadcast an alle Teilnehmer über das ausgestrahlte TV-Bild als eingeblendeter Text überlagert wird.

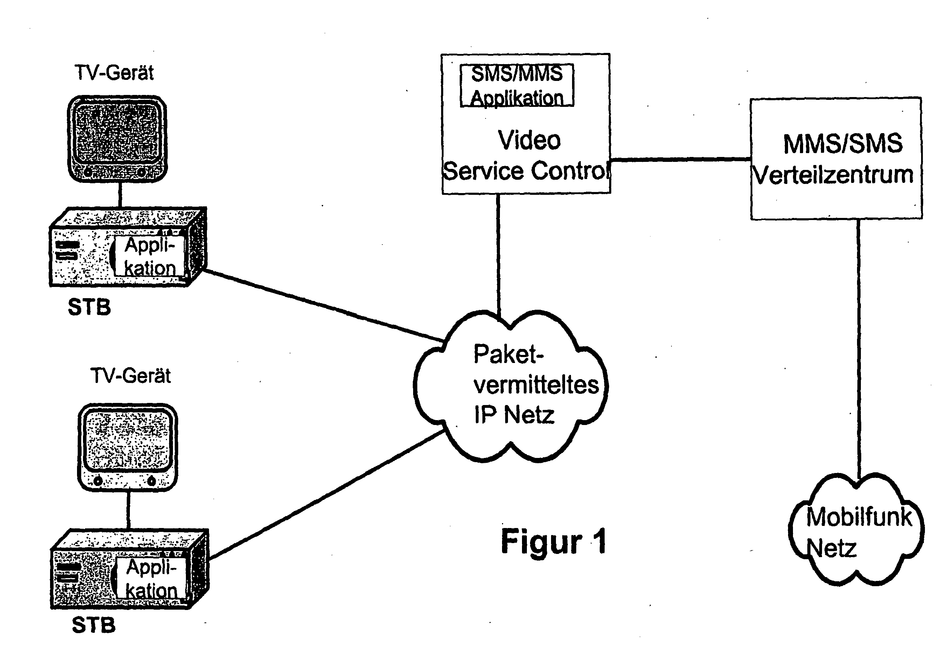

FIG 1 zeigt eine beispielhafte Darstellung der Erfindung, die im folgenden näher erläutert wird.

In einem IP basierten Netz mit Video-zentrischen Diensten steuert typischerweise ein zentrale Video Control Einrichtung, z.B. ein Video Control Server die Videodienste. Dieser Video Control Server verwaltet die einzelnen Video-Tln und deren Service Profil, steuert die Vergebührung und steuert die Oberfläche (GUI, Graphical User Interface) die mittels an der Set Top Box (STB) angeschlossenem TV-Gerät angezeigt wird. Zur Steuerung bzw. Auswahl der Dienste besteht eine Kommunikation, z.B. HTTP basiert, zwischen einem Client auf der STB und dem Video Control Server.

Das erfindungsgemäße Verfahren sieht vor, dass der Video Control Server als neuen Diensttyp auch das Empfangen und/oder Senden von Kurznachrichten durch eine entsprechende Applikation, z.B. eine SMS/MMS-Applikation unterstützt. Der Video Tln soll dabei über seine Standard PSTN Rufnummer adressiert werden. Dafür subskribiert sich der Video Tln mit seiner PSTN Rufnummer bei dem Video Control Server. Als Option könnte die Adressierung des Video Tln auch rein IP basiert sein, z.B. über eine URI (z.B. teilnehmer@domain.de). In diesem Fall müsste das SMS/MMS-Verteilzentrum das Versenden von SMS/MMS zu solchen IP basierten Adressen unterstützen.

Heutige SMS/MMS-Verteilzentren unterstützen das Senden von SMS auch an PSTN Tln. Der PSTN Tln wird dabei über seine normale PSTN Rufnummer adressiert. Dies erfordert heute entweder spezielle Endgeräte (SMS wird dabei inband kodiert über spezielle Protokolle übertragen) oder die SMS wird im Verteilzentrum in Sprache umgewandelt und dem PSTN Tln vorgelesen. MMS an PSTN Tln erfordert ebenfalls ein spezielles Endgerät, zu dem das Verteilzentrum z.B. einen Sprachkanal aufbaut und dann diesem über eine Modemverbindung die MMS sendet.

Das erfindungsgemäße Verfahren sieht des weiteren vor, dass sich der Video Control Server im Namen aller von ihm verwalteten Video Tln bei einem SMS/MMS Verteilzentrum anmeldet. Dem Verteilzentrum wird also die PSTN Rufnummer der Video Tln bekannt gemacht. Neu ist, dass der Eintrag im Verteilzentrum so erfolgt, dass der PSTN Tln über den Video Control Server erreicht werden kann, d.h. der Video Control Server agiert als der "Gateway", über den dem PSTN-Tln eine SMS/MMS zugestellt werden kann (der Video Control Server schliesst SMS/MMS Protokoll des öff. Netzes ab und setzt es in ein geeignetes Format zur Weiterleitung der SMS/MMS Inhalte an die Appl. auf der STB um). Der Transport der SMS und MMS zwischen Verteilzentrum und Video Control Server erfolgt über geeignete Schnittstelle, z.B. IP-basiert.

Der Video Control Server enthält eine Applikation zum Empfang und/oder Senden der SMS/MMS gemäß SMS/MMS Standards, d.h. der Video Control Server enthält die SMS/MMS Applikation für alle von ihm verwalteten Video Tln. Da der Video Control Server die SMS/MMS Signalisierung in dieser Applikation abschließt, gilt eine an den Video Control Server übertragene SMS/MMS auch als erfolgreich angeliefert

Das Übertragen des eigentlichen Inhaltes der SMS/MMS zum Video Tln erfolgt über eine IP-basierte Schnittstelle zwischen dem Video Control Server und der STB, z.B. XML codiert. Erfindungsgemäß enthält die STB dafür eine Applikation die die eigentlichen Inhaltsdaten der SMS/MMS mit der jeweiligen SMS/MMS Applikation auf dem Video Control Server austauschen kann.
Falls die STB online ist, d.h. eine IP-Verbindung hat, meldet sich die Applikation auf der STB bei der SMS/MMS Applikation auf dem Video Control Server an. Solange die STB online ist, können dann SMS/MMS in der STB empfangen werden. Die STB Applikation wandelt die empfangen Daten in eine Form um die als Bild auf dem an der STB angeschlossenen TV Gerät darstellbar ist. Bei SMS werden die enthaltenen Zeichen als Text dargestellt. Bei einer MMS werden die enthaltenen Bilder und Zeichen als Bild mit Text dargestellt. Dieses Bild kann dann durch die STB auch über ein bestehendes Videobild überlagert werden. (Hinweis: Heutige STB inklusive heutigen SW Clients für Videodienste unterstützen die notwendige "alphablending" Technologie für ein Überlagern von Video Bildern.)

Ist die STB online, das TV Gerät aber ausgeschaltet sind mehrere Optionen möglich:
- die STB speichert den SMS/MMS Inhalt zwischen und zeigt bei Einschalten des TV-Geräts einen Hinweis für empfangene SMS/MMS in Form eines Video-Bilds an
- die STB speichert den SMS/MMS Inhalt zwischen und gibt einen Hinweis über empfangene SMS/MMS an der STB aus (Lampe an, Ton über Lautsprecher)
- die STB schaltet ein über SCART angeschlossenes TV-Gerät automatisch an (sofern das TV-Gerät dies unterstützt und im stand-by Betrieb ist)

Die IP basierte Schnittstelle zwischen dem Video Control Server und der STB erlaubt auch das Senden einer Quittung, dass der Tln die SMS/MMS gelesen hat.

Ist die STB nicht online, so ist dies dem Video Control Server aufgrund der nicht vorhandenen Anmeldung der STB Applikation bekannt. In diesem Fall werden alle empfangen SMS/MMS in der SMS/MMS Applikation des Tln gespeichert. Bei der nächsten Anmeldung der STB Applikationen werden diese SMS/MMS nacheinander dem Tln über die STB zugestellt.

Das Versenden von SMS/MMS erfolgt im Prinzip über die gleichen Wege wie vorab beschrieben. Heutige STB erlauben z.B. Texteingabe über IR Tastaturen. Je nach Möglichkeiten der STB können Bildinformationen für MMS eingeben werden, z.B. das aktuell zu sehende TV Bild, Aufnahme eines Bildes über eine an der STB angeschlossene Kamera, Bildinformation die auf einer internen Festplatte gespeichert ist oder auch über ein in die STB einsteckbares externes Speichermedium (z.B. USB Stick, FlashMemory Card). Letztere Option erlaubt auch den Import von SMS/MMS Nachrichten die mit einem Mobilfunkendgerät empfangen wurden falls das Mobilfunkendgerät ein externes Speichermedium besitzt.

Die STB Applikation fasst eingegeben Text- und Bildinformationen zusammen und sendet diese an den SMS/MMS Client im Video Control Server. Dieser gibt diese im geeigneten Format zur weiteren Versendung an das Verteilzentrum weiter.

### Vergleich von alternativen Lösungen mit der erfindungsgemäßen Lösung

- SMS/MMS könnten über PSTN an ein spezielles PSTN Endgerät gesendet werden. Dafür ist aber ein spezielles Endgerät erforderlich welches SMS darstellen kann und welches den Anschluss und die Ansteuerung eines TV Gerätes unterstützt. Ferner erfordert dies typischerweise die Subskription des CLIP Service, was insbesondere für analoge PSTN Tln zusätzliche Kosten bedeutet. Für MMS müssen die Bildinformationen über eine Modemverbindung vom Endgerät abgeholt und könnten dann auf einem angeschlossen TV Gerät dargestellt werden. Das Versenden von MMS ist über solche Endgeräte aber zunächst nicht möglich.
- Das SMS/MMS Verteilzentrum könnte SMS/MMS Nachrichten direkt über eine IP basierte Verbindung an ein geeignetes Endgerät senden. Wenn dieses Endgerät eine Schnittstelle zu einem TV-Gerät unterstützt, könnte der SMS/MMS Inhalt auch über ein TV-Gerät ausgegeben werden. Dieser Ansatz benötigt zum einen entsprechende Endgeräte sowie des weiteren eine IP Verbindung zwischen diesem Endgerät und dem SMS/MMS Verteilzentrum. (Nachteile siehe unten)
- SMS/MMS können bequem zu Hause am TV-Gerät empfangen und versendet werden. Damit ergeben sich neue Anwendungsfälle bzw. Nutzergruppen für SMS/MMS auch ohne Mobilfunkgerät.
- Das erfindungsgemäße Verfahren erlaubt eine echte Personalisierung des Empfängers für zugestellte SMS/MMS auf Basis der Tln-Profile des Video Control Servers. Dies ist eine zwingende Anforderung für das Zustellen von SMS/MMS. Typischerweise kann in einem solchen Tln-Profil genau unterschieden werden welcher Tln tatsächlich im Moment den Dienst nutzt. Dieses erlaubt die Identifizierung und Authentifizierung (über eine PIN) des tatsächlichen Nutzers. Dies ist ein wesentlicher Vorteil gegenüber einer Lösung, bei dem nur auf Basis einer IP Verbindung SMS/MMS an Tln-Endgeräte (STB, o.ä.) gesendet werden. Wenn die Subskription der IP-Verbindung beispielsweise generell auf eine Familie läuft, dann reicht es nicht aus auf Basis der IP-Verbindung SMS/MMS zuzustellen, da z.B. sonst der Sohn eine SMS/MMS für den Vater sehen könnte.
- Das Versenden von SMS/MMS läuft erfindungsgemäß ebenfalls über den Video Control Server, der die Autorisierung für diesen Dienst, die Vergebührung sowie die weitere Zustellung mittels SMS/MMS Verteilzentrum übernimmt. Damit ist es möglich das Versenden von SMS/MMS wie heute üblich im Ursprungsnetz (hier TV-Netz) zu vergebühren, das SMS/MMS Verteilzentrum agiert dabei nur als reines Gateway. Alternative Lösungen bei denen das SMS/MMS Versenden von speziellen Endgeräten direkt über das SMS/MMS Verteilzentrum laufen sollte, würden eine Erweiterung der heutigen SMS/MMS Verteilzentren um eine Tln-Verwaltung und Vergebührungsfunktionen erfordern.
- SMS/MMS Empfang und Lesen ist mittels Überblendtechnik parallel zum TV Betrieb möglich. Damit ist z.B. auch eine SMS/MMS basierte Kommunikation parallel zum laufenden Film möglich.
- SMS können bequem über die IR Tastatur der STB geschrieben werden.
- Es können MMS mit Bildinformation wie TV Bilder, Bilder von externen Speichermedien oder einer externen Kamera versendet werden.
- Die IP Verbindung zur STB wird verwendet um MMS zu versenden, dies ist eine einfachere und auch kostenoptimierte Lösung gegenüber dem bisher diskutierten Ansatz MMS Bildinformation über eine zusätzliche Modemverbindung abzuholen.
- Wenn SMS und MMS ausschließlich zwischen den Tln des IPbasierten Videonetzes ausgetauscht werden, so ist es mit dem erfindungsgemäßen Verfahren auch möglich längere SMS (mehr Textzeichen) oder MMS mit Bildinformation mit größeren Datengrößen zu versenden, da die Beschränkungen aus heutigen Mobilfunk- oder PSTN-Netzen nicht eingehalten werden müssen. In diesem Falle würde der Video Control Server als Verteilzentrum der SMS/MMS an die Video Tln agieren.
- Das erfindungsgemäße Verfahren verwendet in Richtung SMS/MMS Verteilzentrum die heute üblichen Schnittstellen. Die Kommunikation zwischen Video Control Server und STB kann Hersteller-proprietär auf Basis des Standard-IP-Stacks (TCP/UDP auf IP) realisiert werden. Dies erlaubt eine sofortige Realisierung des Verfahrens.

### Einzelne Aspekte des Verfahrens bzw. des Video Control Server gemäß der Erfindung:

- Der Video Control Server agiert als Gateway für SMS/MMS an/von seinen Video Tln. Dafür meldet er sich im Namen aller seiner Video Tln beim SMS/MMS Verteilzentrum an.
- Die Adressierung eines Video Tln erfolgt videonetz intern durch den Video Control Server und ist somit flexibel. In Zusammenarbeit mit heutigen SMS/MMS Verteilzentren ist dies eine E.164 Adresse. Unterstützen zukünftige SMS/MMS Verteilzentren z.B. einen Uniform Resource Identifier (URI) als Tln Adresse, so deckt dies das erfindungsgemäße Verfahren ebenfalls ab.
- Das Verfahren gewährleistet einen personalisierte Zustellung von SMS/MMS auf Basis des Tln Profils des Video Tln.
- Der Video Control Server kennt den Status der STB des Video Tln und behandelt ankommende SMS/MMS entsprechend.
- Das Verfahren erlaubt einen direkten Austausch von SMS/MMS zwischen den Video Tln über den Video Control Server. Der Video Control Server agiert dabei als Videonetz internes SMS/MMS Verteilzentrum.

### Zeichnerische Darstellung des Ablaufs bei einem Ausführungsbeispiel der Erfindung

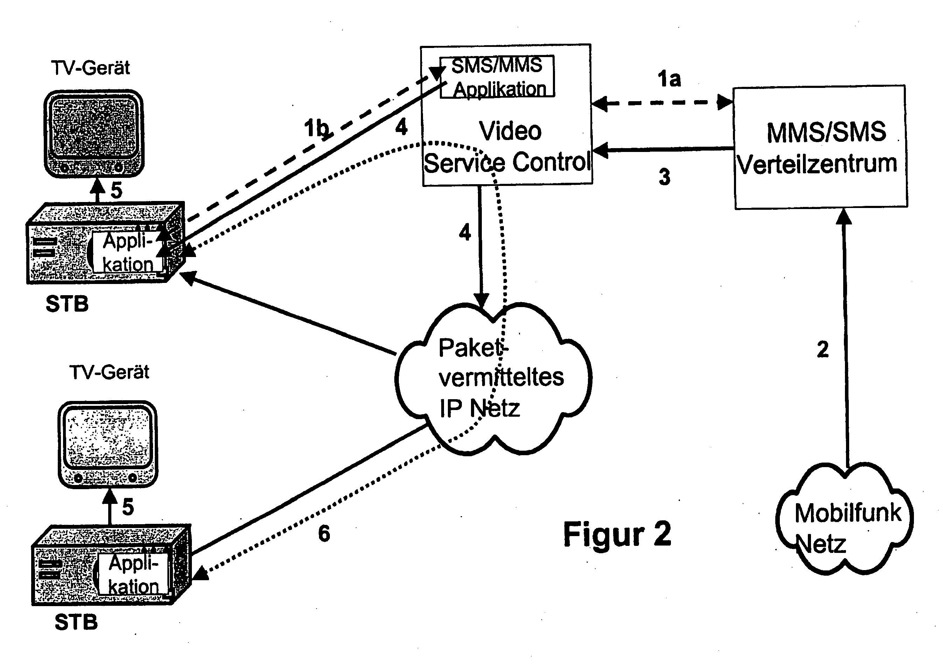

Figur 2 unterstützt die folgende beispielhafte Beschreibung der Abläufe gemäß der vorliegenden Erfindung.

### Registrierung:

- 1a:: Der Video Control Server ist beim SMS/MMS Verteil- zentrum für alle seine Video Tln angemeldet (Basis ist z.B. die E.164 PSTN Rufnummer des Video Tln).
- 1b:: Die STB Applikation des Video Tln meldet sich beim SMS/MMS Client auf dem Video Control Server an

Ablauf: Eine SMS oder MMS wird aus dem Mobilfunknetz an einen
Video Tln gesendet
2. Die SMS/MMS wird an die PSTN Rufnummer des Video Tln gesendet und kommt im Verteilzentrum an.
3. Das Verteilzentrum weiß aufgrund der Anmeldung des Video Control Servers, dass der Video Tln über den Video Control Server erreicht werden kann. Es sendet die SMS an den Video Control Server über ein geeignetes Protokoll weiter. Der Video Control Server ordnet aufgrund der Rufnummer die empfangen SMS/MMS dem richtigen SMS/MMS Client des Video Tln zu. Der erfolgreiche Empfang der SMS wird an das Verteilzentrum zurück quittiert.
4. Der SMS/MMS Client weiß aufgrund der Anmeldung der STB Applikation, dass die STB des Video Tln online ist. Über das Tln-Profil kann geprüft werden dass der tatsächlich adressierte Empfänger angemeldet ist. Ist dies der Fall werden die Inhaltsdaten an die Applikation auf der STB gesendet.
5. Die Inhaltsdaten werden auf dem angeschlossenen TV-Gerät dargestellt.

Option: SMS/MMS werden innerhalb des Videonetzes zwischen den Video Tln ausgetauscht
6. Über den Video Control Server können die Video Tln direkt SMS/MMS austauschen. Der Video Control Server agiert dabei als SMS/MMS Verteilzentrum des Videonetzes.

## Patentansprüche

1. Verfahren zum Verteilen einer Kurznachricht an Video-Teilnehmer, demgemäß
a) die Kurznachricht für einen der Video-Teilnehmer zunächst zu einem Verteilzentrum für Kurznachrichten geleitet wird,
b) die Kurznachricht von dem Verteilzentrum für Kurznachrichten an eine Video Control Einrichtung zum Steuern von Diensten der Video-Teilnehmer weitergeleitet wird,
c) die Kurznachricht von der Video Control Einrichtung an ein Endgerät des einen der Video-Teilnehmer weitergeleitet wird,
d) wobei sich die Video-Teilnehmer für einen Kurznachrichten-Dienst bei der Video Control Einrichtung subskribieren,
e) wobei alle für den Kurznachrichten-Dienst subskribierten Video-Teilnehmer durch die Video Control Einrichtung bei dem Verteilzentrum für Kurznachrichten angemeldet werden, indem dem Verteilzentrum für Kurznachrichten Adressen dieser Video-Teilnehmer durch die Video Control Einrichtung bekanntgemacht werden,
f) wobei ein Eintrag der genannten Adressen im Verteilzentrum für Kurznachrichten so erfolgt, dass das Verteilzentrum für Kurznachrichten Kurznachrichten an die genannten Video-Teilnehmer ausschließlich an die Video Control Einrichtung weiterleitet,
g) wobei eine für einen der genannten Video-Teilnehmer von dem Verteilzentrum für Kurznachrichten kommende Kurznachricht durch die Video Control Einrichtung an ein Endgerät des einen der genannten Video-Teilnehmer weitergeleitet wird.

2. Verfahren nach Anspruch 1,
**dadurch gekennzeichnet,**
**dass**
a) für eine Übertragung von Daten zwischen der Video Control Einrichtung und dem Endgerät des einen der Video-Teilnehmer das IP-Protokoll verwendet wird,
b) die Kurznachricht von der Video Control Einrichtung erst dann an das Endgerät des einen der Video-Teilnehmer weitergeleitet wird, wenn das Endgerät online ist.

3. Verfahren nach Anspruch 1 oder 2,
**dadurch gekennzeichnet,**
**dass** zur Adressierung des einen der Video-Teilnehmer, für den die Kurznachricht bestimmt ist, PSTN-Rufnummern verwendet werden.

4. Verfahren nach Anspruch 1 oder 2,
**dadurch gekennzeichnet,**
**dass** zur Adressierung des einen der Video-Teilnehmer, für den die Kurznachricht bestimmt ist, eine IP-Adresse oder URI verwendet werden.

5. System zur Steuerung von Diensten von Video-Teilnehmern, umfassend eine Video Control Einrichtung und ein Verteilzentrum für Kurznachrichten,
a) bei dem die Video Control Einrichtung Mittel dafür aufweist, dass sich die Video-Teilnehmer für einen Kurznachrichten-Dienst bei der Video Control Einrichtung subskribieren können,
b) bei dem die Video Control Einrichtung Mittel dafür aufweist, dass alle für den Kurznachrichten-Dienst subskribierten Video-Teilnehmer bei dem Verteilzentrum für Kurznachrichten angemeldet werden können, indem dem Verteilzentrum für Kurznachrichten Adressen dieser Video-Teilnehmer durch die Video Control Einrichtung bekanntgemacht werden,
c) bei dem das Verteilzentrum für Kurznachrichten Mittel dafür aufweist, dass ein Eintrag der genannten Adressen im Verteilzentrum für Kurznachrichten so erfolgt, dass das Verteilzentrum für Kurznachrichten Kurznachrichten an die genannten Video-Teilnehmer ausschließlich an die Video Control Einrichtung weiterleitet,
d) bei dem die Video Control Einrichtung Mittel dafür aufweist, dass eine für einen der genannten Video-Teilnehmer von dem Verteilzentrum für Kurznachrichten kommende Kurznachricht an ein Endgerät des einen der genannten Video-Teilnehmer weitergeleitet werden kann.

6. System nach Anspruch 5,
**dadurch gekennzeichnet,**
**dass**
a) die Video Control Einrichtung Mittel dafür aufweist, dass sie einen tatsächlichen Nutzer des Endgerätes identifizieren kann,
b) die Video Control Einrichtung Mittel dafür aufweist, dass eine für den einen der genannten Video-Teilnehmer von dem Verteilzentrum für Kurznachrichten kommende Kurznachricht nur dann an das Endgerät des einen der genannten Video-Teilnehmer weitergeleitet wird, wenn der tatsächliche Nutzer mit dem einen der genannten Video-Teilnehmer identisch ist.

7. System nach Anspruch 5 oder 6,
**dadurch gekennzeichnet,**
**dass** die Video Control Einrichtung Mittel dafür aufweist, dass eine von einem ihrer Video-Teilnehmer stammende Kurznachricht an das Verteilzentrum für Kurznachrichten weitergeleitet wird, wenn die Kurznachricht an einen Video-Teilnehmer adressiert ist, der nicht innerhalb ihres Verwaltungsbereichs liegt.

8. System nach Anspruch 5 oder 6,
**dadurch gekennzeichnet,**
**dass** die Video Control Einrichtung Mittel dafür aufweist, dass eine von einem ihrer Video-Teilnehmer stammende Kurznachricht direkt an ein Endgerät eines adressierten Video-Teilnehmers weitergeleitet wird, wenn die Kurznachricht an einen Video-Teilnehmer adressiert ist, der innerhalb ihres Verwaltungsbereichs liegt.

9. System nach einem der Ansprüche 5 bis 8, bei dem das Verteilzentrum für Kurznachrichten
a) eine Anmeldungseinrichtung umfaßt, bei der Video-Teilnehmer mithilfe der Video Control Einrichtung, die die Dienste der Video-Teilnehmer steuert, angemeldet werden können,
b) eine Verteileinrichtung umfaßt, die ankommende Kurznachrichten, die an solchermaßen angemeldete Video-Teilnehmer adressiert sind, an die Video Control Einrichtung weiterleitet.

## Claims

1. Method for distributing a short message to video subscribers, according to which
a) the short message for one of the video subscribers is first of all routed to a distribution centre for short messages,
b) the short message is forwarded from the distribution centre for short messages to a video control device for controlling services of the video subscribers,
c) the short message is forwarded from the video control device to a terminal of the one of the video subscribers,
d) wherein the video subscribers subscribe with the video control device for a short message service,
e) wherein all the video subscribers subscribed for the short message service are registered with the distribution centre for short messages by the video control device by virtue of the video control device notifying the distribution centre for short messages of addresses of said video subscribers,
f) wherein an entry for said addresses is made in the distribution centre for short messages such that the distribution centre for short messages forwards short messages to said video subscribers exclusively to the video control device,
g) wherein a short message coming from the distribution centre for short messages for one of said video subscribers is forwarded by the video control device to a terminal of the one of said video subscribers.

2. Method according to Claim 1,
**characterized**
**in that**
a) the IP protocol is used for a transmission of data between the video control device and the terminal of the one of the video subscribers,
b) the short message is forwarded from the video control device to the terminal of the one of the video subscribers not before the terminal is online.

3. Method according to Claim 1 or 2,
**characterized**
**in that** PSTN telephone numbers are used for addressing the one of the video subscribers for whom the short message is intended.

4. Method according to Claim 1 or 2,
**characterized**
**in that** an IP address or URI is used for addressing the one of the video subscribers for whom the short message is intended.

5. System for controlling the services of video subscribers, comprising a video control device and a distribution centre for short messages,
a) in which the video control device has means allowing the video subscribers to subscribe with the video control device for a short message service,
b) in which the video control device has means allowing all the video subscribers subscribed for the short message service to be registered with the distribution centre for short messages by virtue of the video control device notifying the distribution centre for short messages of addresses of these video subscribers,
c) in which the distribution centre for short messages has means for making an entry for said addresses in the distribution centre for short messages such that the distribution centre for short messages forwards short messages to said video subscribers exclusively to the video control device,
d) in which the video control device has means allowing a short message coming from the distribution centre for short messages for one of said video subscribers to be forwarded to a terminal of the one of said subscribers.

6. System according to Claim 5,
**characterized**
**in that**
a) the video control device has means allowing it to identify an actual user of the terminal,
b) the video control device has means for forwarding a short message coming from the distribution centre for short messages for the one of said video subscribers to the terminal of the one of said video subscribers only when the actual user is identical to the one of said video subscribers.

7. System according to Claim 5 or 6,
**characterized**
**in that** the video control device has means for forwarding a short message coming from one of its video subscribers to the distribution centre for short messages if the short message is addressed to a video subscriber which is not situated within its administrative area.

8. System according to Claim 5 or 6,
**characterized**
**in that** the video control device has means for forwarding a short message coming from one of its video subscribers directly to a terminal of an addressed video subscriber if the short message is addressed to a video subscriber which is within its administrative area.

9. System according to one of Claims 5 to 8, in which the distribution centre for short messages
a) comprises a registration device in which video subscribers can be registered using the video control device which controls the services of the video subscribers,
b) comprises a distribution device which forwards to the video control device incoming short messages which are addressed to video subscribers registered in such a manner.

## Revendications

1. Procédé pour distribuer un message court à des usagers vidéo, selon lequel
a) le message court est tout d'abord acheminé, pour l'un des usagers vidéo, vers un centre de distribution de messages courts ;
b) le message court est retransmis par le centre de distribution de messages courts vers un dispositif de contrôle vidéo pour le contrôle de services des usagers vidéo ;
c) le message court est retransmis par le dispositif de contrôle vidéo vers un terminal dudit un des usagers vidéo ;
d) les usagers vidéo souscrivant un service de messages courts auprès du dispositif de contrôle vidéo ;
e) tous les usagers vidéo qui souscrivent le service de messages courts étant déclarés par le service de contrôle vidéo auprès du centre de distribution de messages courts par communication des adresses de ces usagers vidéo au centre de distribution de messages courts par le dispositif de contrôle vidéo ;
f) une introduction desdites adresses dans le centre de distribution de messages courts étant opérée de manière telle que le centre de distribution de messages courts retransmet exclusivement au dispositif de contrôle vidéo des messages courts adressés auxdits usagers vidéo ;
g) un message court en provenance du centre de distribution de messages courts pour l'un desdits usagers vidéo étant retransmis par le dispositif de contrôle vidéo vers un terminal dudit un desdits usagers vidéo.

2. Procédé selon la revendication 1, **caractérisé en ce que**
a) le protocole IP est utilisé pour une transmission de données entre le dispositif de contrôle vidéo et le terminal dudit un des usagers vidéo ;
b) le message court n'est retransmis par le dispositif de contrôle vidéo au terminal dudit un des usagers vidéo que si le terminal est en ligne.

3. Procédé selon la revendication 1 ou 2, **caractérisé en ce que** des numéros d'appel PSTN sont utilisés pour l'adressage dudit un des usagers vidéo auquel le message court est destiné.

4. Procédé selon la revendication 1 ou 2, **caractérisé en ce qu'**une adresse IP ou URI est utilisée pour l'adressage dudit un des usagers vidéo auquel le message court est destiné.

5. Système de contrôle de services d'usagers vidéo, comprenant un dispositif de contrôle vidéo et un centre de distribution de messages courts, dans lequel
a) le dispositif de contrôle vidéo comporte des moyens pour que les usagers vidéo puissent souscrire un service de messages courts auprès du dispositif de contrôle vidéo ;
b) le dispositif de contrôle vidéo comporte des moyens pour que tous les usagers vidéo qui souscrivent le service de messages courts puissent être déclarés auprès du centre de distribution de messages courts par communication d'adresses de ces usagers vidéo au centre de distribution de messages courts par le dispositif de contrôle vidéo ;
c) le centre de distribution de messages courts comporte des moyens pour qu'une introduction desdits adresses dans le centre de distribution de messages courts soit opérée de manière telle que le centre de distribution de messages courts retransmette exclusivement au dispositif de contrôle vidéo des messages courts adressés auxdits usagers vidéo ;
d) le dispositif de contrôle vidéo comporte des moyens pour qu'un message court en provenance du centre de distribution de messages courts pour l'un desdits usagers vidéo puisse être retransmis à un terminal dudit un desdits usagers vidéo.

6. Système selon la revendication 5, **caractérisé en ce que**
a) le dispositif de contrôle vidéo comporte des moyens lui permettant d'identifier un usager effectif du terminal ;
b) le dispositif de contrôle vidéo comporte des moyens pour qu'un message court en provenance du centre de distribution de messages courts pour l'un desdits usagers vidéo ne soit retransmis au terminal dudit un desdits usagers vidéo que si l'usager effectif est identique audit un desdits usagers vidéo.

7. Système selon la revendication 5 ou 6, **caractérisé en ce que** le dispositif de contrôle vidéo comporte des moyens pour qu'un message court en provenance de l'un de ses usagers vidéo soit retransmis au centre de distribution de messages courts si le message court est adressé à un usager de la vidéo qui ne se trouve pas dans les limites de sa zone de gestion.

8. Système selon la revendication 5 ou 6, **caractérisé en ce que** le dispositif de contrôle vidéo comporte des moyens pour qu'un message court en provenance de l'un de ses usagers vidéo soit retransmis au centre de distribution de messages courts si le message court est adressé à un usager de la vidéo qui se trouve dans les limites de sa zone de gestion.

9. Système selon l'une des revendications 5 à 8, dans lequel le centre de distribution de messages courts
a) comprend un dispositif de déclaration auprès duquel des usagers vidéo peuvent être déclarés à l'aide du dispositif de contrôle vidéo qui contrôle les services des usagers vidéo ;
b) comprend un dispositif de distribution qui retransmet au dispositif de contrôle vidéo des messages courts entrants qui sont adressés à des usagers vidéo déclarés de cette manière.
